(19) Europäisches Patentamt

European Patent Office

Office européen des brevets

(11) **EP 2 916 463 A1**

(12) **EUROPEAN PATENT APPLICATION**

(43) Date of publication:
**09.09.2015 Bulletin 2015/37**

(51) Int Cl.:
***H04B 1/28*** (2006.01)

(21) Application number: **14305318.9**

(22) Date of filing: **05.03.2014**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (72) Inventor: **Hoek, Cornelis**<br>**70435 Stuttgart (DE)**<br><br>(74) Representative: **Lück, Stephan et al**<br>**Alcatel-Lucent Deutschland AG**<br>**Intellectual Property Business Group**<br>**Lorenzstraße 10**<br>**70435 Stuttgart (DE)** |
| (71) Applicant: **ALCATEL LUCENT**<br>**92100 Boulogne-Billancourt (FR)** | |

(54) **Radio receiver and method for operating a radio receiver**

(57) The present invention refers to a radio receiver (11, 11') for receiving a radio frequency signal (RFS) and to a method for operating such a radio receiver (11, 11'). In order to improve the image rejection capabilities of the radio receiver (11, 11'), it is proposed that the radio receiver (11, 11') comprise an radio frequency front end (13) and digital signal processing circuitry (15) for processing a digital signal (I1' Q1') generated by the front end (13), the digital signal (I1', Q1') comprising a wanted signal (RF1, RF2) and the front end (13) including a down converter (21) for down-converting the radio frequency signal (RFS), the down-converter (21) having a first local oscillator (27) adapted to generate a first oscillator signal, wherein the first local oscillator is controllable so that a frequency (LO1) of the local oscillator signal is variable depending on a frequency control signal (F1), wherein the receiver (11, 11') has a processing element (47) operable for determining a spectrum (S) of the radio frequency signal (RFS) and a controller (49) operable for outputting the frequency control signal (F1) to the first oscillator (27), and wherein the controller (49) is operable for calculating the frequency control signal (F1) from the spectrum (S) such that an adverse effect of an image signal (IM1, IM2) to the wanted signal (RF1, RF2) is minimized.

Fig. 1

## Description

### Field of the invention

The present invention refers to a radio receiver for receiving a radio frequency signal. The invention further refers to a method for operating such a radio receiver.

### Background

So-called low intermediate frequency receivers are known in the art. Such receivers use a comparatively low intermediate frequency allowing for simple digital processing of an intermediate frequency signal and avoiding implementation difficulties of direct conversion receives, which convert radio frequency signal directly down to a baseband signal rather than generating an intermediate frequency signal. Moreover, low intermediate frequency receivers may be extended to multiple frequency receivers. A multiple frequency receiver can demodulate multiple wanted signals from the intermediate frequency signal simultaneously using a single front end for preamplifying and down converting the radio frequency signal.

It is known to apply complex mixers (IQ mixers) for generating a complex intermediate frequency signal comprising an in-phase (I) and a quadrature (Q) component. In a complex intermediate frequency signal, a wanted signal and an image signal can be distinguished from each other so that so called image-reject receivers can be implemented. An example of such an image-reject receiver based on IQ mixers is described in the scientific publication Jack P.F. Glas, "Digital I/Q imbalance compensation in a low-IF receiver", in Proc. of Global Telecommunications Conference 1998 (GLOBECOM 1998), vol. 3, pp. 1461 - 1466.

Even if such image rejection techniques are applied, the wanted signal is still disturbed by an unwanted image signal because the image rejection techniques do not work perfectly.

### Summary

In many applications, image rejection is critical for the performance of the receiver. The object of the present invention is therefore to provide a radio receiver and a method for operating a radio receiver that reduce the impact of unwanted image signals on at least one wanted signal, thereby improving the overall image rejection capabilities of the receiver.

According to an embodiment of the present invention, a radio receiver for receiving a radio frequency signal is provided, the radio receiver comprising a radio frequency front end and digital signal processing circuitry for processing a digital signal generated by the front end, the digital signal comprising a wanted signal and the front end including a down converter for down-converting the radio frequency signal, the down converter having a first local oscillator adapted to generate a first oscillator signal, wherein the first local oscillator is controllable so that a frequency of the local oscillator signal is variable depending on a frequency control signal, wherein the receiver has a processing element operable for determining a spectrum of the radio frequency signal and a controller operable for outputting the frequency control signal to the first oscillator, and wherein the controller is operable for calculating the frequency control signal from the spectrum such that an adverse effect of an image signal to the wanted signal is minimized.

Typically, this embodiment is applied in connection with a receiver topology that already provides image rejection to a certain extent. When adapting the first oscillator frequency to the spectrum of the radio frequency signal, the unwanted effect of the image signal on the wanted signal is reduced because the oscillator frequency is dynamically adjusted so that the power of the image signal is as little as possible. The processing element and the controller needed for adapting the oscillator frequency can be quite easily added to a digital signal processing part of the receiver and can therefore be implemented easily and cost-efficiently (e.g. in hardware using an FPGA or ASIC, in software using a programmable computer like a Digital Signal Processor (DSP), or in any combination of hardware and software).

In an embodiment, the controller is operable for determining at least one image signal power value characterizing a received power of the image signal provided that the first local oscillator is operating at a given frequency. The image signal power value may be determined from the spectrum measured by the processing element. For example, the frequency of the image signal (image frequency) may be calculated from the frequency of the oscillator signal and the frequency of the at least one wanted signal. The image signal power value then corresponds to a value of the spectrum at the image frequency.

In an embodiment, the controller is operable for determining at least one wanted signal power value characterizing a received power of the wanted signal provided that the first local oscillator is operating at a given frequency. The wanted signal power value may be obtained from the measured spectrum in the same way as the image signal power value. That is, the wanted signal power value may correspond to a value of the spectrum at the frequency of the wanted signal.

In an embodiment, the controller is operable for calculating at least one signal power ratio value characterizing a ratio of the received power of the image signal to the received power of the wanted signal, provided that the first local oscillator is operating at a given frequency. The signal power ratio is a metric for the adverse effect of the image signal on the wanted signal and may therefore advantageously used for determining the optimum first local oscillator frequency. In another embodiment, the reciprocal value of said ratio may be calculated, i.e. the power ratio value may characterize the ratio of the received power of the wanted signal to the received power of the image signal for a given first local oscillator operating frequency.

When searching the optimum first local oscillator frequency, a frequency range including possible local oscillator frequencies (i.e. technically feasible frequencies when using a specific implementation of the first local oscillator and/or radio receiver) should be considered, According, in an embodiment, the image signal power value, the wanted signal power value and/or the signal power ratio value is calculated for multiple local oscillator frequencies.

In an embodiment, the controller is operable for calculating a value of a target function of the signal power value, of the wanted signal power and/or of the signal ratio value and wherein calculating the frequency control signal comprises optimizing (e.g. minimizing or maximizing) the target function, thereby adjusting the local oscillator frequency such that the adverse effect of the image signal to the wanted signal is minimized.

In an embodiment, determining the spectrum of the radio frequency signal is based on determining the spectrum of the digital signal generated by the front end. The digital signal being a down-converted version of the radio frequency signal can be processed more easily. In addition no additional analog to digital converters are needed in order to determine the spectrum. Determining the spectrum may further be based on the frequency control signal or any other signal or value that depends on the first local oscillator signal frequency. That is, the spectrum of the radio frequency signal may be determined from the spectrum of the digital signal and the frequency control signal. Consequently, the spectrum is calculated correctly even when varying the operating frequency of the first local oscillator.

In an embodiment, the processing element is operable for calculating a Discrete Fourier Transform (DFT) of the digital signal or a signal derived therefrom. In a preferred embodiment, a Fast Fourier Transform (FFT) algorithm is applied for determining the spectrum.

In an embodiment, the receiver is a multi-conversion low intermediate frequency receiver, the digital signal being a digital intermediate frequency signal, wherein the signal processing circuitry comprises at least one second down converter for down-converting the digital signal to a digital baseband signal related to a certain wanted signal. Moreover, the two down-converters of the multi-conversion low intermediate frequency receiver may include complex mixers (IQ-mixers). In the digital baseband signal resulting from the two down-conversions, the wanted signal can be distinguished from the image signal. As a consequence, an image-reject receiver architecture is provided. However, an image-reject receiver as such does not eliminate the image signal(s) completely; the image signal has still a remaining adverse effect to the wanted signal. The present approach for dynamically adapting the first local oscillator frequency to the spectrum of the radio frequency signal reduces this remaining adverse effect to a minimum.

In an embodiment, the at least one second down converter comprises a second local oscillator for generating a second local oscillator signal, the signal processing circuitry being operable for adjusting an operating frequency of the second local oscillator based on the frequency of the first local oscillator signal. In one embodiment, the controller is arranged for generating at least one further frequency control signal for controlling the frequency of the second local oscillator of the at least one second down converter and the signal processing circuitry is adapted for controlling the operating frequency of the second local oscillator based on the further frequency control signal. In another embodiment, the signal processing circuitry is adapted for controlling the operating frequency of the second local oscillator based on the first frequency control signal or any other signal or value that characterizes the frequency of the first local oscillator signal.

In an embodiment, the receiver is adapted for receiving multiple wanted signals, wherein the digital signal processing circuitry comprises multiple second down converters for down-converting the digital signal to multiple wanted signals. In other words, the receiver according to this embodiment is a multiple frequency receiver allowing to demodulate multiple channels from the radio frequency signal simultaneously.

According to another embodiment of the present invention, a method of operating a radio receiver for receiving a radio frequency signal is provided, the radio receiver comprising an radio frequency front end and digital signal processing circuitry for processing a digital signal generated by the front end, the digital signal comprising a wanted signal and the front end including a down converter for down-converting the radio frequency signal, the down-converter having a first local oscillator adapted to generate a first oscillator signal, wherein the method comprises determining a spectrum of the radio frequency signal; calculating the frequency control signal from the spectrum such that an adverse effect of an image signal to the wanted signal is minimized; and varying a frequency of the first local oscillator signal depending on the frequency control signal.

In an embodiment, the method comprises operating a radio receiver described herein.

According to another embodiment of the invention, a radio receiver for receiving a radio frequency signal is provided, the radio receiver comprising a radio frequency front end and digital signal processing circuitry for processing a digital signal generated by the front end, the digital signal comprising a wanted signal and the front end including a down converter for down-converting the radio frequency signal, the down converter having a first local oscillator adapted to generate a first oscillator signal, wherein the radio receiver is operable for executing the method of operating a radio receiver.

According to yet another embodiment of the invention, computer program product is provided which is programmed for executing the method described herein when run on a computer. The computer program product may include any computer readable storage media like semiconductor memory (RAM, ROM, Flash Memory, etc.), optical storage (e.g. optical discs) and/or magnetic storage (e.g. magnetic discs or tapes). The computer may be e.g. a programmable Digital Signal Processor (DSP) that may be a part of the receiver. For example, the digital signal processing circuitry may include a DSP. Moreover, the computer may include a general purpose processor programmed for executing the method.

**Brief description of the figures**

Exemplary embodiments and further advantages of the present invention are shown in the Figures and described in detail hereinafter.

Figure 1     shows a radio receiver comprising an analog radio frequency front end and digital signal processing circuitry;
Figure 2     shows a radio receiver according to another embodiment;
Figure 3     shows a diagram of a spectrum of a received radio frequency signal with two radio channels, a local oscillator frequency and corresponding image signals highlighted;
Figure 4     shows a similar diagram as Figure 3 with a different local oscillator frequency;
Figure 5     shows a flowchart of a method for operating the radio receiver shown in Figure 1 or Figure 2;
Figure 6     shows diagrams of a power of an image signal over the selected local oscillator frequency for the two radio channels;
Figure 7     shows a ratio of the power of the image signal to the power of a wanted signal for the two radio channels over the selected local oscillator frequency; and
Figure 8     shows a diagram of the spectrum of the received signal similar to Figure 3 with an optimum local oscillator frequency and corresponding image frequencies marked.

**Description of the embodiments**

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

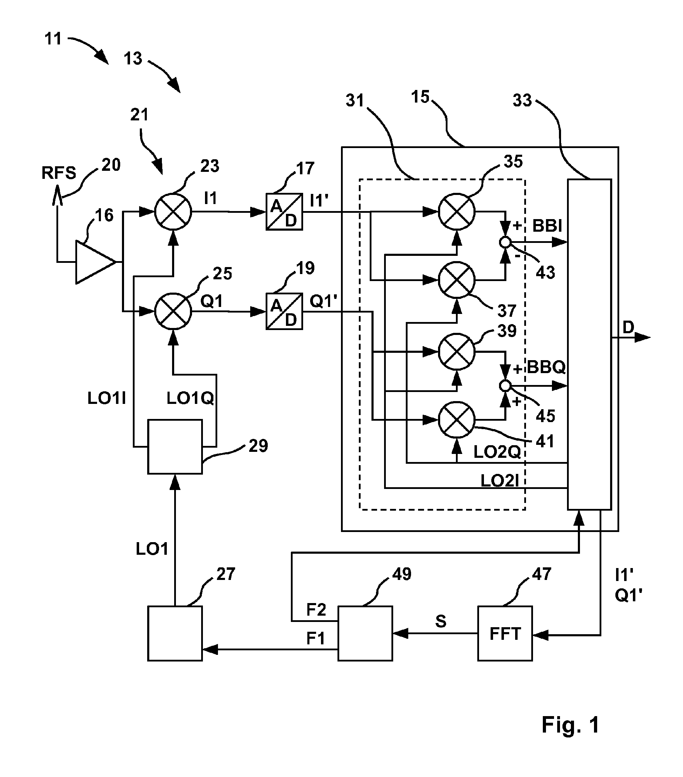

Figure 1 shows a block diagram of a receiver 11 according to an embodiment of the invention. The receiver 11 comprises a radio frequency front end 13 and digital signal processing circuitry 15 connected to outputs of analog to digital converters 17, 19 of the front end 13. The front end 13 includes a low noise amplifier (LNA 16) adapted to pre-amplify a received radio frequency signal RFS. The radio frequency signal RFS may be received by an antenna 20 connected to an input of the LNA 16 of the receiver 11.

A first down converter 21 converts the radio frequency signal RFS down to a low intermediate frequency signal I1, Q1. In the shown exemplary embodiment, the first down converter includes an IQ-mixer adapted for converting the radio frequency signal RFS to a complex intermediate frequency signal comprising an in-phase component signal I1 and a quadrature component signal Q1. The IQ mixer comprises a first mixer element 23 and a second mixer element 25, which two mixer elements 23, 25 are connected to an output of the LNA 16.

It should be noted that - for the sake of simplicity - the block diagrams do not show all elements that may be included in a practical implementation of the receiver 11. For example, the receiver 11 may have a RF power splitter arranged between the output of the LNA 16 and the inputs of the two mixer elements 23, 25, which is not shown in the Figures. Moreover, any filters such as an intermediate frequency low-pass filter (IF filter) are not shown in order to keep the diagrams simple.

The first down converter 21 comprises a first local oscillator 27 adapted to generate a first oscillator signal LO1. An output of the first local oscillator 27 is connected to a quadrature generator 29. A first output of the quadrature generator 29 is adapted to output a first in-phase local oscillator signal LO1I to the first mixer element 23. A second output of the quadrature generator 29 is adapted to output a quadrature local oscillator signal LO1Q to the second mixer element 25. The two signals LO1I and LO1Q are shifted in phase by 90° with respect to each other. That is, the signal LO1I may be a cosine signal and the signal LO1Q may be a corresponding sine signal of the same frequency related to the same time scale.

An output of the first mixer element 23 for outputting the in-phase component I1 of the complex intermediate frequency signal is connected to an input of the first analog to digital converter 17. Accordingly, an output of the second mixer element 25 for outputting the quadrature component Q1 of the complex intermediate frequency signal is connected to an input of the second analog to digital converter 19. Thus, the two analog to digital converters 17, 19 are operable to output a complex digital intermediate frequency signal I1', Q1' to the signal processing circuitry 15.

The signal processing circuitry 15 comprises a second down converter 31 including a complex mixer. The second down converter is configured for converting the complex digital intermediate signal I1', Q1' to a complex digital baseband signal BBI, BBQ related to a selected radio channel. The complex digital baseband signal BBI, BBQ is forwarded to a baseband processor 33 of the signal processing circuitry 15. The baseband processor 33 is operable for performing baseband processing operations such as demodulation and/or decoding and finally reconstructing payload data D that is included into the radio frequency signal RFS. In Figure 1, an output of the baseband processor 33 for outputting the payload data D is depicted.

The signal processing circuitry 15 is arranged for generating a second complex local oscillator signal L02I, LO2Q. A respective oscillator or signal generator may be part of the baseband processor 33 and is not shown in detail in Figure 1. The second down converter 31 comprises further mixer elements 35, 37, 39, 41. An in-phase branch of the second down converter 31 includes the mixer elements 35 and 37, inputs of which are connected to the output of the first analog to digital converter 17 and therefore to the in-phase digital intermediate signal I1'. Another input of the mixer element 35 is connected to the second in-phase local oscillator signal LO2I and another input of the mixer element 37 is connected to the second quadrature local oscillator signal LO2Q. Inputs of a subtractor 43 of the in-phase branch are connected to outputs of the two mixer elements 35 and 37 so that the subtractor 43 can generate a difference signal of the signals output by these mixer elements 35, 37. The difference signal corresponds to the in-phase component BBI of the baseband signal.

Moreover, the second down converter 31 includes a quadrature branch comprising the mixer elements 39 and 41. An input of each of these two mixer elements 39, 41 is connected to the output of the second analog to digital converter 19 and therefore to the quadrature component Q1' of the digital complex intermediate frequency signal I1', Q1'. A further input of the mixer element 39 is connected to the in-phase component LO2I of the complex second oscillator signal; and a further input of the mixer element 41 is connected to the quadrature component LO2Q of the complex second oscillator signal. Outputs of the two mixer elements 39, 41 of the quadrature branch of the second down converter 31 are connected to different inputs of an adder 45 of said quadrature branch so that the adder 45 can generate a sum signal characterizing the sum of the signals outputted by the two mixer elements 39, 41. The further sum signal corresponds to the quadrature component BBQ of the digital complex baseband signal.

The topology of the receiver 13 as described so far corresponds to a double conversion double quadrature receiver because the receiver 13 is adapted to perform two successive frequency conversions and because the receiver has two quadrature generators. This basic topology is described in more detail in the scientific paper Jack P.F. Glas, "Digital I/Q imbalance compensation in a low-IF receiver", in Proc. of Global Telecommunications Conference 1998 (GLOBECOM 1998), vol. 3, pp. 1461 - 1466.

An advantage of such receiver topologies is that they allow for distinguishing a wanted signal from an image signal at an image frequency, thereby allowing for image rejection without using expensive filters like SAW filters. Receivers that are able to distinguish the wanted signal from the image signal are generally referred "image-reject receivers". One example of such image-reject receivers is the above-described double conversion double quadrature receiver. However, the invention is not limited to this type of receiver; the invention can be applied in combination with any type of receiver.

Even when applying image-reject topologies, image signals cannot be totally removed from the intermediate frequency signal because an image-reject topology cannot be implemented perfectly. As a consequence, such receivers have still limited image rejection capabilities that may be insufficient in some applications. In order to cope with the limited image rejection capabilities, the receiver 13 described herein as additional elements that allow for dynamically adjusting the frequency of the first local oscillator signal LO1I, LO1Q in order to minimize an adverse effect of the image signal to the wanted signal.

In particular, the receiver comprises a processing element 47 operable for determining a spectrum S of at least a part of the radio frequency signal RFS. In the shown embodiment, the processing element 47 is coupled with the signal processing circuitry 15 so that the processing element 47 may analyze the digital intermediate frequency signal I1', Q1' and/or the digital baseband signal BBI, BBQ or any signal or value derived from these signals I1', Q1', BBI, BBQ. In an embodiment, the processing element 47 may be operable for generating the spectrum S by applying a Discrete Fourier Transform (DFT) to the signals I1', Q1', BBI, BBQ or signals or values derived thereof. Preferably, a Fast Fourier Transform (FFT) may be applied.

The so obtained spectrum S is forwarded to a controller 49 arranged for outputting a frequency control signal F1 to the first local oscillator 27 so that the controller 49 can adjust the first local oscillator frequency LO1 within a certain frequency range. That is, the first local oscillator 27 has an adjustable frequency. Accordingly, the local oscillator may comprise circuitry such as a Voltage Controlled Oscillator (VCO), a Phase Locked Loop (PLL) and/or similar circuits that are configured for adjusting the local oscillator frequency depending on the frequency control signal F1. By adjusting the local oscillator frequency LO1, the frequency of a (potential) image signal is also adjusted. The controller 49 analyses the spectrum S and determines from the spectrum S the local oscillator frequency LO such that the image frequency corresponds to the frequency of a rather weak unwanted image signal. As a consequence, the wanted signal is less affected by this image signal.

In the shown embodiment, the controller 49 is arranged for outputting a further frequency control signal F2, which characterizes a required operating frequency of the at least one second local oscillator. The further frequency control signal F2 may be forwarded to a respective input of the signal processing circuitry 15 including the at least one second local oscillator. For instance, the further frequency control signal F2 may be forwarded to an input of the baseband processor 15. The signal processing circuitry is operable to adjust the frequency of the at least one second local oscillator based on the further frequency control signal F2. As a consequence, the second down-converter 31 correctly converts the intermediate frequency signal I1', Q1' to the baseband signal BBI, BBQ even when the operating frequency of the first local oscillator 27 changes.

In general, there is a fixed relationship between the two frequency control signals F1, F2 because the required operating frequency of the at least one second local oscillator depends on the frequency LO1 of the first local oscillator signal. Accordingly, in another embodiment, the first frequency control signal F1 is forwarded to the signal processing circuitry 15 so that the operating frequency of the at least one second local oscillator can be adjusted. In this embodiment, the second frequency control signal F2 may be omitted.

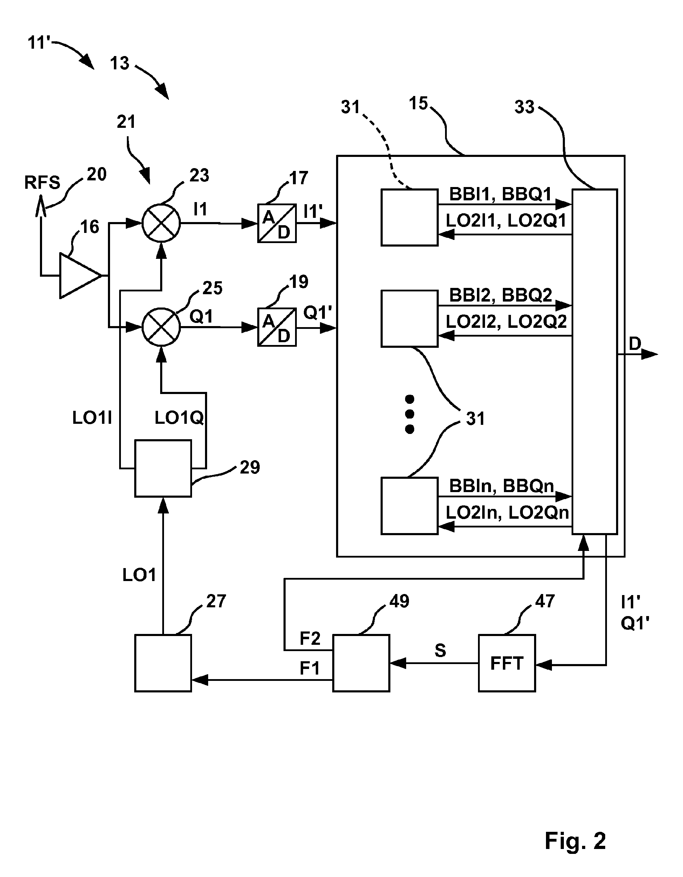

As shown in Figure 2, the present invention may also be applied in combination with multiple frequencies receivers. In contrast to the single frequency receiver shown in Figure 1, the multiple frequencies receiver 11' of Figure 2 has multiple second down converters 31 arranged in the signal path after the outputs of the analog to digital converters 17, 19. The receiver 11' may be dimensioned such that a bandwidth of the intermediate signal I1', Q1' is at least the bandwidth of two adjacent channels. The intermediate frequency signal I1', Q1' then includes multiple channels of the radio frequency signal RFS. A single down converter 31 may down convert one of the multiple channels and forward a respective baseband signal BBI1, ..., BBIn; BBQ1, ..., BBQn to the baseband processor 33. Since there are multiple channels and therefore multiple wanted signals having different frequencies, multiple image frequencies are created by selecting a certain first local oscillator frequency LO1. In the embodiment shown in Figure 2, the controller 49 is configured for adjusting the first local oscillator frequency LO1 such that all wanted signals corresponding to the multiple channels to be received by the multiple frequency receiver 11' are as little impacted by image signals on the respective image frequencies as possible. In general, a tradeoff between the impact of the individual image signals to the respective wanted signals must be found.

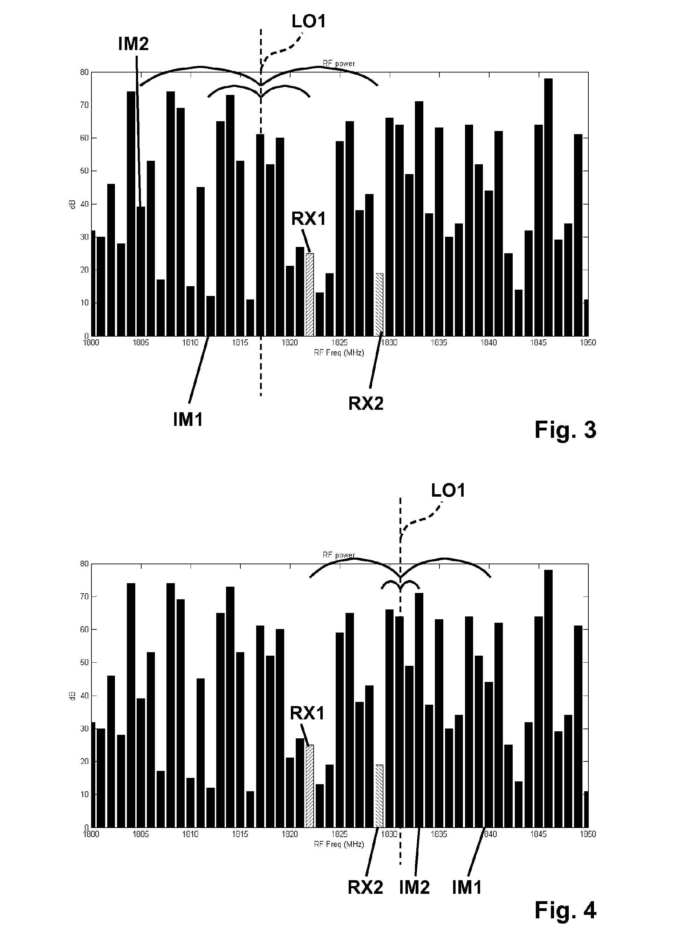

Figure 3 shows the spectrum S of an exemplary radio frequency signal RFS, which may have been determined by the processing element 47. Although in the present embodiment the processing element 47 operates on a down-converted version of the radio frequency signal RFS (e.g. the digital intermediate frequency signal I1', Q1'), the spectrum S is shown in the frequency scale of the original radio frequency signal, which spectrum ranges from 1800 MHz to 1850 MHz. In the shown example, a radio system is used that subdivides this radio spectrum in multiple channels with a channel spacing of 1 MHz. The first local oscillator frequency can be adjusted in steps of 0.5 MHz.

According to a scenario shown in Figure 3, two channels having the frequencies, RF1 = 1822 and RF2 = 1829 shall be received by the multiple frequency receiver 11' simultaneously. The signal power of these channels RF1, RF2 is shown as hatched diagrams while the signal power of all other channels is represented by means of solid black bars. When setting the first local oscillator frequency to LO1 = 1817 MHz, the image frequency of the channel RF1 is IM1 = LO1 - (RF1 - LO1) = 1812 MHz. The image frequency of the channel RF2 is IM2 = LO1 - (RF2 - LO1) = 1805 MHz. As can be seen in Figure 3, the first local oscillator frequency LO1 is lower than the two frequencies RF1, RF2 of the wanted signal. Consequently, the image frequencies IM1, IM2 are less than the first local oscillator frequency LO1.

In another embodiment, the first local oscillator frequency LO1 is greater than the frequencies RF1, RF2 of the two wanted signals on the respective two radio channels (see Figure 4). Accordingly, the frequencies IM1, IM2 of the image signals are greater than the first local oscillator frequency LO1.

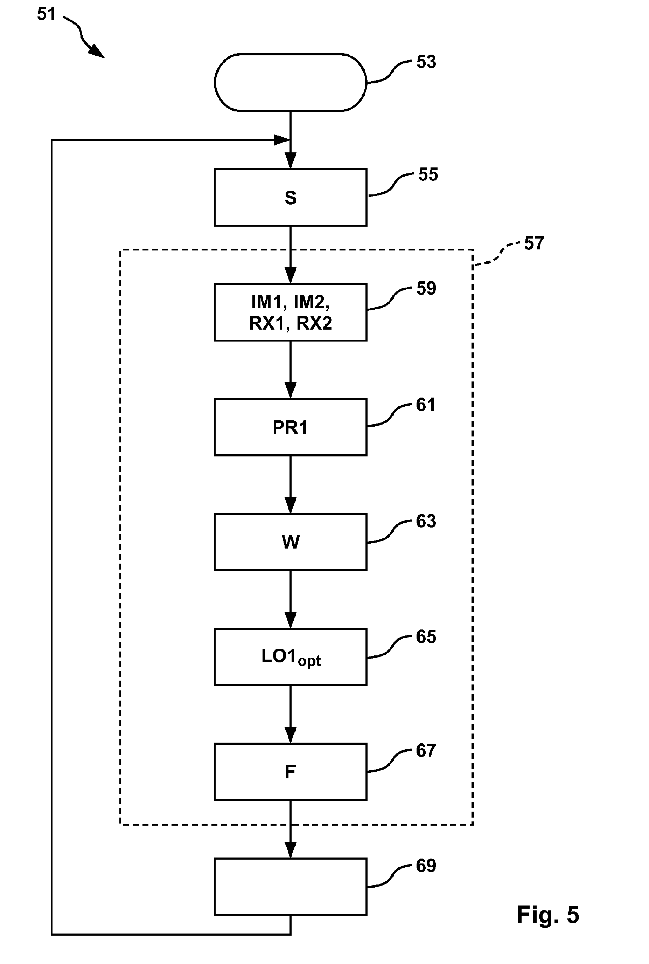

In the following, the operation of the receiver 11, 11', in particular the operation of the elements 47 and 49 performing the adaption of the first oscillator frequency LO1, is described in more detail referring to a flow chart shown in Figure 5. The flowchart illustrates a method 51 for operating the single frequency receiver 11 or the multiple frequencies receiver 11'.

After a start 53 of the method 51, the spectrum S of the radio frequency signal is determined. Preferably, the spectrum S is determined over a predefined frequency range. In the examples described herein, the predefined frequency range extends from 1800 MHz to 1850 MHz, but when carrying out the invention in connection with a specific radio system any other frequency range may be predefined. The predefined frequency range may cover one channel of the radio system, multiple adj acent channels or even all radio channel of the radio system within a contiguous frequency band. For example, the radio system may be the Global System for Mobile communications (GSM) radio system, the radio system used in the Universal Mobile Telecommunications System (UMTS) or the radio system of the Long Term Evolution (LTE) system. These systems are specified by the Third Generation Partnership Project (3GPP). However, the invention may also be applied in combination with non-3GPP radio systems.

A step 57 of the method 51 calculates the frequency control signal F1 such that the at least one wanted signal RF1, RF2, ..., RFn is as little affected by image signals on at least one respective image frequency IM1, IM2, ..., IMn as possible. Assuming that the first local oscillator frequency LO1 can be varied within an allowed range $R_{LO1} = [LO1_{min}, LO1_{max}]$, where $LO1_{min} \leq LO1 \leq LO1_{max}$, step 57 may comprise evaluating a target function of the first local oscillator frequency over the allowed range $R_{LO1}$, finding an optimum first local oscillator frequency value $LO1_{opt}$ and determining a frequency control signal value $F_{opt}$ that makes the first local oscillator generate the first local oscillator signal LO1 with the optimum frequency $LO1_{opt}$. In other words, step 57 may comprise an optimization process. The optimization process may include minimizing or maximizing the target function. The target function may depend not only on the first local oscillator frequency value LO1 but also on the spectrum S and the at least one frequency RF1, RF2 of the wanted signal.

In the embodiment described herein, the optimization is based on a cost function that calculates a power ratio value PR1, PR2 characterizing a ratio of the power of the image signal IM1, IM2 to the power of the respective wanted signal RX1, RX2. When applying this embodiment to the multiple frequency receiver 11', an aggregate power ratio value PR may be calculated from the individual power ration values PR1, PR2, e.g. by determining the maximum power ratio value of all considered frequencies RF1, RF2 received by the multiple frequency receiver 11' corresponding to the worst signal power to image power ratio in terms of image rejection. When generalizing the method 51 for cases where the multiple frequencies receiver 11' is able to receive n frequencies simultaneously, the cost function C can be expressed as follows.

$$C = C(LO1) = \max_{i=1,...,n} PR_i(LO1) = \max_{i=1,...,n} (IM_i - RX_i) \qquad (1)$$

The cost function C may be minimized in order to obtain the optimum first local oscillator frequency $LO1_{opt}$.

$$LO1_{opt} = \arg \min_{LO1 \in R_{LO1}} C(LO1) \qquad (2)$$

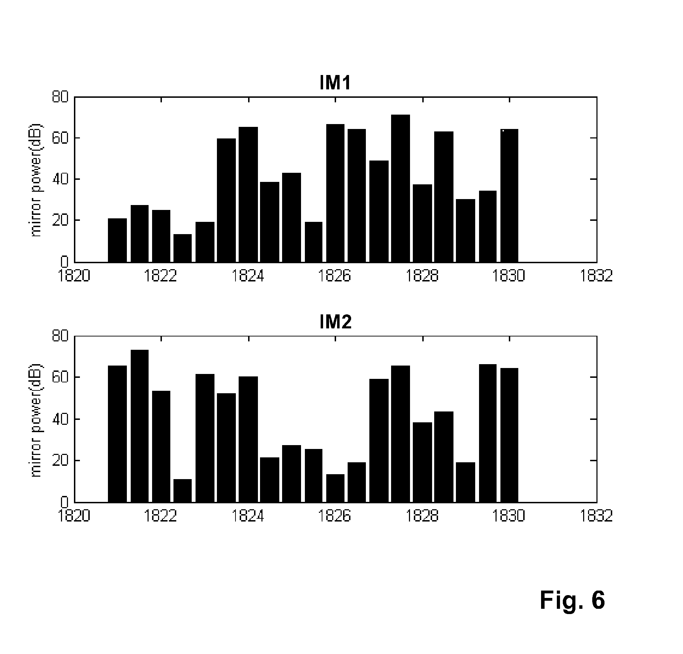

Accordingly, step 57 comprises a sub-step 59 for calculating a power of the signal on the image frequency for each first oscillator frequency within the allowed range $R_{LO1}$. Although in other embodiments, the whole contiguous allowable range $R_{LO1}$ could be considered, the embodiment described herein considers only possible oscillator frequencies located on a certain raster, e.g. the above-mentioned 0.5 MHz raster. Instead of this 0.5 MHz raster, another set of discrete frequencies within the allowed range $R_{LO1}$ may be applied, e.g. set of frequency settings that are technically possible when using certain type of local oscillator that uses a frequency scaler for frequency synthesis. In case of a multiple frequency receiver 11', the power of the image signal is calculated for each wanted signal to be received. In the shown example, two wanted signals RX1 and RX2 are considered. Therefore, two respective image signal power values IM1 and IM2 are calculated. These image power values IM1, IM2 are shown in Figure 6.

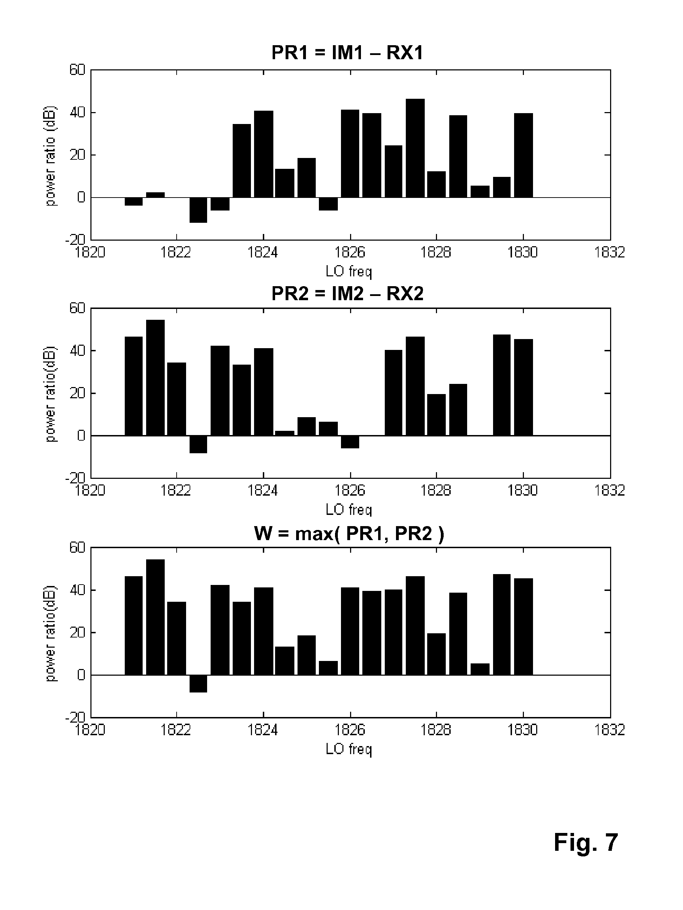

A further sub-step 61 of step 57 calculates a power ratio for each considered wanted signal RF1, RF2. The power ratio is the ratio of the power IM1, IM2 of the image signal to the power RF1, RF2 of the wanted signal. The power ratio may be calculated by subtracting the individual power values RF1, IM1, RF2, IM2 represented in a logarithmic scale (i.e. in dB) from each other as shown in Figure 7.

Step 57 comprises another sub-step 63 that determines the maximum of each considered power ratio for the considered first local oscillator LO1 frequencies. The maximum reflects the worst value W of all considered power ratios. In the shown example the maximum of IM1-RX1 and IM2-RX2 is calculated, see diagram at the bottom of Figure 7. In another embodiment, the reciprocal value of the power ratio may be considered. In such an embodiment, the worst value (in terms of image rejection) is the minim of the power ratio value related to a given first local oscillator frequency LO1.

Based on the worst values, a sub-step 65 of step 57 determines the optimum first local oscillator frequency $LO1_{opt}$. In the shown embodiment, sub-step 57 includes finding the local oscillator frequency $LO1_{opt}$ for which the work value W is minimized, i.e. $LO1_{opt} = \arg \min W(LO1)$.

Finally, a sub-step 67 of step 57 determines the frequency control value F1 from the optimum first local oscillator frequency $LO1_{opt}$, e.g. by means of a predefined equation, a table stored in a memory region, etc. A subsequent step 69 forwards the frequency control value F1 to the first local oscillator 27 so that the first local oscillator frequency LO1 is set to the optimum first local oscillator frequency $LO1_{opt}$.

As shown in Figure 5, the method 51 may be executed repeatedly, i.e. the method 51 may return to step 55 after step 69 has been completed, in order to continuously adapt the first local oscillator frequency LO1 to changes of the spectrum S and/or the frequency RX1, RX2 of the at least one selected channel to be received by the receiver 11, 11'.

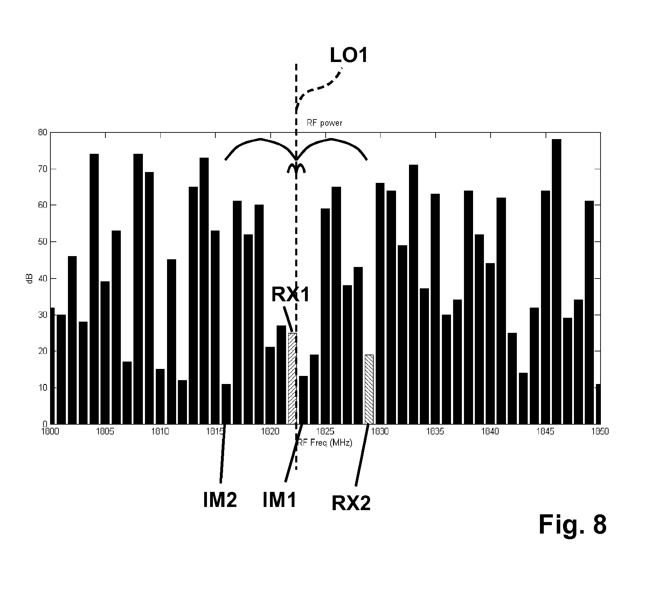

In the example shown herein, the optimum local oscillator frequency is LO1opt = 1822.5 MHz, resulting in the image frequencies IM1, IM2 shown in Figure 8. It can be seen that power level at the image frequencies IM1, IM2 is comparatively low leading to a little adverse effect of the image signals IM1, IM2 on the wanted signals RF1, RF2.

To sum up, the receiver 11, 11 and method 51 described herein allows for dynamically adapting the first local oscillator frequency LO1 based on the spectrum S of the radio frequency signal RFS. Adapting the local oscillator frequency LO1 reduces the adverse effect of image signals IM1, IM2 to the at least one wanted signal RF1, RF2. As a consequence the performance of known image-reject receiver architectures having limited image rejection capabilities is increased.

## Claims

1. Radio receiver (11, 11') for receiving a radio frequency signal (RFS), the radio receiver (11, 11') comprising a radio frequency front end (13) and digital signal processing circuitry (15) for processing a digital signal (I1', Q1') generated by the front end (13), the digital signal (I1', Q1') comprising a wanted signal (RF1, RF2) and the front end (13) including a down converter (21) for down-converting the radio frequency signal (RFS), the down converter (21) having a first local oscillator (27) adapted to generate a first oscillator signal,

   wherein the first local oscillator is controllable so that a frequency (LO1) of the local oscillator signal is variable depending on a frequency control signal (F1), wherein the receiver (11, 11') has a processing element (47) operable for determining a spectrum (S) of the radio frequency signal (RFS) and a controller (49) operable for outputting the frequency control signal (F1) to the first oscillator (27), and wherein the controller (49) is operable for calculating the frequency control signal (F1) from the spectrum (S) such that an adverse effect of an image signal (IM1, IM2) to the wanted signal (RF1, RF2) is minimized.

2. Receiver (11, 11') according to claim 1, wherein the controller (49) is operable for determining at least one image signal power value (IM1, IM2) characterizing a received power of the image signal provided that the first local oscillator (27) is operating at a given frequency (LO1).

3. Receiver (11, 11') according to claim 1 or 2, wherein the controller (49) is operable for determining at least one wanted signal power value (RF1) characterizing a received power of the wanted signal provided that the first local oscillator (27) is operating at a given frequency (LO1).

4. Receiver (11, 11') according to one of the precedent claims, wherein the controller (49) is operable for calculating at least one signal power ratio value (PR1, PR2) characterizing a ratio of the received power of the image signal (IM1, IM2) to the received power of the wanted signal (RX1, RX2), provided that the first local oscillator is operating at a given frequency (LO1).

5. Receiver (11, 11') according to one of claims 2 to 4, wherein the image signal power value (IM1, IM2), the wanted signal power value (RX1, RX2) and/or the signal power ratio value (PR) is calculated for multiple local oscillator frequencies (LO1).

6. Receiver (11, 11') according to one of the precedent claims, wherein the controller (49) is operable for calculating a value of a target function of the signal power value, of the wanted signal power and/or of the signal ratio value and wherein calculating the frequency control signal (F1) comprises optimizing the target function, thereby adjusting the local oscillator frequency (LO1) such that the adverse effect of the image signal (IM1, IM2) to the wanted signal (RF1, RF2) is minimized.

7. Receiver (11, 11') according to one of the precedent claims, wherein determining the spectrum (S) of the radio frequency signal (RFS) is based on determining the spectrum of the digital signal (I1', Q1') generated by the front end (13).

8. Receiver (11, 11') according to claim 7, wherein the processing element (47) is operable for calculating a Discrete Fourier Transform of the digital signal (I1', Q1') or a signal derived therefrom.

9. Receiver (11, 11') according to one of the precedent claims, wherein the receiver (11, 11') is a multi-conversion low intermediate frequency receiver, the digital signal being a digital intermediate frequency signal (I1', Q1') and wherein the signal processing circuitry (15) comprises at least one second down converter (31) for down-converting the digital signal (I1', Q1') to a digital baseband signal (BBI, BBQ) related to a certain wanted signal (RX1, RX2).

10. Receiver (11, 11') according to claim 9, wherein the at least one second down converter (31) comprises a second local oscillator for generating a second local oscillator signal (L02I, LO2Q; LO2I1, LO2I2, ..., L02In, LO2Q1, LO2Q2, ..., LO2Qn), the signal processing circuitry (15) being operable for adjusting an operating frequency of the second local oscillator based on the frequency of the first local oscillator signal (LO1).

11. Receiver (11') according to one of the precedent claims, wherein the receiver (11') is adapted for receiving multiple wanted signals (RX1, RX2), wherein the digital signal processing circuitry (15) comprises multiple second down converters (31) for down-converting the digital signal (I1', Q1') to multiple wanted signals (RX1, RX2).

12. Method (51) for operating a Radio receiver (11, 11') for receiving a radio frequency signal (RFS), the radio receiver (11, 11') comprising an radio frequency front end (13) and digital signal processing circuitry (15) for processing a digital signal (I1', Q1') generated by the front end (13), the digital signal (I1', Q1') comprising a wanted signal (RF1, RF2) and the front end (13) including a down converter (21) for down-converting the radio frequency signal (RFS), the down-converter (21) having a first local oscillator (27) adapted to generate a first oscillator signal, wherein the method comprises

- determining (55) a spectrum (S) of the radio frequency signal (RFS);
- calculating (57) the frequency control signal (F1) from the spectrum (S) such that an adverse effect of an image signal (IM1, IM2) to the wanted signal (RF1, RF2) is minimized; and
- varying (69) a frequency (LO1) of the first local oscillator signal (LO1) depending on the frequency control signal (F1).

13. Method (51) according to claim 12, wherein the method (51) comprises operating a radio receiver (11, 11') according to one of claims 1 to 11.

14. Computer program product, preferably a computer readable storage medium, the computer program product comprising a computer program that is programmed for executing a method (51) according to claim 12 or 13 when run on a computer.

Fig. 1

Fig. 2

Fig. 3

Fig. 4

51

53

55

S

57

59

IM1, IM2,
RX1, RX2

61

PR1

63

W

65

$LO1_{opt}$

67

F

69

**Fig. 5**

Fig. 6

Fig. 7

Fig. 8

Europäisches
Patentamt

European
Patent Office

Office européen
des brevets

# EUROPEAN SEARCH REPORT

Application Number

EP 14 30 5318

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/261548 A1 (KRONE ANDREW W [US]) 23 October 2008 (2008-10-23) * abstract; figure 1, * * paragraph [0016] - paragraph [0020] * * paragraph [0033] - paragraph [0041] * | 1-8,12 | INV. H04B1/28 |
| X | US 2006/003722 A1 (TUTTLE G T [US] ET AL TUTTLE G TYSON [US] ET AL) 5 January 2006 (2006-01-05) * abstract * * paragraph [0005] - paragraph [0007] * | 1-5,7,8, 12 | |
| X | WO 00/11794 A1 (KONINKL PHILIPS ELECTRONICS NV [NL]; PHILIPS PATENTVERWALTUNG [DE]) 2 March 2000 (2000-03-02) * abstract; figure 2 * * page 6, line 19 - line 26 * * claims 6-7 * | 1-8,12 | |
| X | US 2007/207736 A1 (RAGAN THOMAS G [US] RAGAN THOMAS GLEN [US]) 6 September 2007 (2007-09-06) * abstract; figures 2-3,8 * * paragraph [0023] - paragraph [0026] * | 1-14 | TECHNICAL FIELDS SEARCHED (IPC) H04B |

The present search report has been drawn up for all claims

| Place of search | Date of completion of the search | Examiner |
|---|---|---|
| Munich | 5 May 2014 | Almenar Muñoz, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 14 30 5318

This annex lists the patent family members relating to the patent documents cited in the above-mentioned European search report.
The members are as contained in the European Patent Office EDP file on
The European Patent Office is in no way liable for these particulars which are merely given for the purpose of information.

05-05-2014

| Patent document cited in search report | | Publication date | Patent family member(s) | | Publication date |
|---|---|---|---|---|---|
| US 2008261548 | A1 | 23-10-2008 | US | 2008261548 A1 | 23-10-2008 |
| | | | WO | 2008131003 A2 | 30-10-2008 |
| US 2006003722 | A1 | 05-01-2006 | NONE | | |
| WO 0011794 | A1 | 02-03-2000 | CN | 1287719 A | 14-03-2001 |
| | | | EP | 1048121 A1 | 02-11-2000 |
| | | | JP | 2002523958 A | 30-07-2002 |
| | | | US | 6577855 B1 | 10-06-2003 |
| | | | WO | 0011794 A1 | 02-03-2000 |
| US 2007207736 | A1 | 06-09-2007 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JACK P.F. GLAS.** Digital I/Q imbalance compensation in a low-IF receiver. *Proc. of Global Telecommunications Conference,* 1998, vol. 3, 1461-1466